# EUROPÄISCHE PATENTSCHRIFT

(11) **EP 0 532 882 B1**
(45) Veröffentlichungstag und Bekanntmachung des Hinweises auf die Patenterteilung: **30.11.1994**
(21) Anmeldenummer: 92113332.8
(22) Anmeldetag: 05.08.1992
(51) Int. Cl.: F16L 5/02, H02G 3/22, A62C 2/06

(54) **Vorrichtung zur Brandabschottung einer Wandöffnung für die Durchführung von Leitungen durch eine Wand**
Fire barrier device through a wall opening for the penetration of conduits
Dispositif coupe-feu placé dans l'ouverture d'une paroi pour la traversée de conduits

(30) Priorität: 19.09.1991 DE 4131152
(43) Veröffentlichungstag der Anmeldung: 24.03.1993
(73) Patentinhaber: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(56) Entgegenhaltungen:
- DE-A- 3 126 872
- FR-A- 2 606 443
- NL-A- 8 302 140

## Beschreibung

Die Erfindung betrifft eine Vorrichtung zur Brandabschottung einer Wandöffnung für die Durchführung von Leitungen, wie elektrische Kabel, Rohre oder dergl., durch eine Wand, mit einem abgedichtet gegen die Wand in der Wandöffnung angeordneten Schottkasten, der für die Leitungen mindestens eine Durchführungsöffnung aufweist, die in Leitungslängsrichtung in Form einer die Leitungen in nach unten durchgebogenem Verlauf aufnehmenden Kabelwanne ausgebildet und durch Einfüllen eines schütt- oder rieselfähigen Brandschutzmittels, insbesondere Quarzsand, in die Kabelwanne verschließbar ist.

Bei bekannten Vorrichtungen dieser Art (vgl. beispielsweise die Firmendruckschrift der ASEA Brown Boveri AG "Schottung von Wand- und Deckendurchbrüchen"_{,} ABB-ZST 31 (12.88 1000 HD) Seite 5) sind die Kabelwanne und die Durchführungsöffnung mit dem Brandschutzmittel ständig gefüllt und verschlossen (siehe auch FR-A-2 606 443). Ein nachträgliches Verlegen von Leitungen ist nur unter Einschränkungen möglich, außerdem umständlich und arbeitsaufwendig, so daß an der Kabelwanne häufig Ablaßeinrichtungen für das Brandschutzmittel vorgesehen sind, um die Kabelwanne vom Brandschutzmittel entleeren und dadurch die Durchführungsöffnung freilegen zu können, wenn die Leitungsbelegung der Durchführungsöffnung geändert werden soll.

Der Erfindung liegt die Aufgabe zugrunde, eine Vorrichtung der eingangs genannten Art so auszubilden, daß Änderungen der Kabelbelegung jederzeit auf einfache und schnelle Weise durchgeführt werden können, dabei aber im Brandfall die Brandabschottung unbeeinträchtigt erhalten bleibt.

Diese Aufgabe wird nach der Erfindung dadurch gelöst, daß mindestens ein das Brandschutzmittel enthaltender und oberhalb der Durchführungsöffnung angeordneter Vorratsbehälter vorgesehen ist, der erst im Brandfall, gesteuert durch Rauch- und/oder Brandmelder, sich zur Kabelwanne hin öffnet und das Brandschutzmittel in die Kabelwanne auslaufen läßt.

Durch die Erfindung wird der Vorteil erreicht, daß die Durchführungsöffnung erst im Brandfall geschlossen wird, vorher aber immer offen ist, und daß daher Änderungen oder Ergänzungen in der Leitungsbelegung der Durchführungsöffnung jederzeit vorgenommen werden können, ohne vorher erst die Durchführungsöffnung freilegen zu müssen. Der Inhalt des Vorratsbehälters an Brandschutzmaterial ist selbstverständlich so groß, daß das Brandschutzmaterial die Kabelwanne und die Durchführungsöffnung vollständig ausfüllt und verschließt, wenn sich der Vorratsbehälter in die Durchführungsöffnung entleert. Der Zeitpunkt des Füllens und Verschließens der Durchführungsöffnung im Verlauf des Brandgeschehens läßt sich durch geeignete Wahl der Rauch- und/oder Brandmelder und ihres Ansprechverhaltens auf Rauch und/oder Wärme nach Wunsch beeinflussen. So besteht insbesondere die Möglichkeit, den Vorratsbehälter nur schon aufgrund gemeldeter Rauchentwicklung sich öffnen zu lassen, um die Durchführungsöffnung zu verschließen und Rauchausbreitung durch die Durchführungsöffnung hindurch zu verhindern. Ist weiter das Brandschutzmittel insbesondere ein Intumeszenzmaterial, das sein ursprüngliches Volumen unter der Einwirkung der Brandwärme stark vergrößert, erfolgt das Öffnen des Vorratsbehälters schon bei niedrigerer Temperatur als die Volumenvergrößerung des Intumeszenzmaterials, so daß das Brandschutzmittel zunächst die Durchführungsöffnung rauchdicht verschließen kann und danach erst sein Volumen vergrößert, um zunächst vielleicht noch verbliebene Hohlräume restlos auszufüllen.

Eine bevorzugte Ausführungsform ist dadurch gekennzeichnet, daß der Vorratsbehälter einen die Durchführungsöffnung nach oben begrenzenden Boden und dieser in senkrechter Projektion über der Kabelwanne liegende bewegliche Bodenteile aufweist, die einen Verschluß des Vorratsbehälters bilden und, gesteuert durch die Rauch- und/oder Brandmelder, aus der Schließstellung in die Offenstellung verstellbar sind. Das Brandschutzmittel kann dann bei geöffnetem Boden unmittelbar nach unten in die Kabelwanne und die Durchführungsöffnung fallen und letztere bis über die Höhe des Bodens auffüllen. Zweckmäßigerweise bestehen die beweglichen Bodenteile aus Klappen, die durch eine steuerbare Halteeinrichtung in der Schließstellung gehalten sind und bei Freigabe durch die Halteeinrichtung abwärts in die Offenstellung fallen. Dabei empfiehlt es sich, daß die Halteeinrichtung durch die Rauch- und/oder Brandmelder gesteuerte Elektromagnete aufweist, die im eingeschalteten Zustand die Klappen in der Schließstellung halten. Sollten daher im Brandfall die Brand- und/oder Rauchmelder gestört werden und/oder die Stromversorgung der Elektromagnete störungsbedingt aussetzen, fallen die Klappen selbsttätig in die Offenstellung.

In einer sehr zweckmäßigen Ausführungsform ist der Vorratsbehälter als Teil des Schottkastens ausgebildet und in der Wandöffnung angeordnet. Der Vorratsbehälter bedarf dann keiner eigenen Montage, auch ermöglicht diese Ausführungsform kleinere Baugrößen der Vorrichtung insgesamt. Jedoch muß dabei der Vorratsbehälter der Brandeinwirkung standhalten, weil andernfalls der von ihm zunächst versperrte Teil der Wandöffnung für eine Rauch- und Brandausbreitung durch die Wandöffnung hindurch freigegeben würde. Es kann sich daher in dieser Hinsicht empfehlen, die in Leitungslängsrichtung stirnseitigen Wände des Vorratsbehälters mit unbrennbaren Brandschutzplatten abzudecken, um eine ausreichende Feuerwiderstandsdauer des Vorratsbehälters in der Durchführungsöffnung zu gewährleisten. Die Brandschutzplatten bestehen zweckmäßig aus Kalziumsilikat.

Es besteht aber selbstverständlich auch die Möglichkeit, einen oder mehrere Vorratsbehälter außerhalb der Wandöffnung seitlich an der Wand anzuordnen, was ohne Vergrößerung der Wandöffnung die Bereitstellung auch größerer Mengen des Brandschutzmittels ermöglicht. Eine insoweit bevorzugte Ausführungsform ist dadurch gekennzeichnet, daß je einer der Vorratsbehälter auf beiden Seiten der Wand angeordnet und an der Wand gehalten ist, wobei die obere Begrenzung der Wandöffnung auch die der Durchführungsöffnung bildet und die Kabelwanne auf beiden Wandseiten bis unter die Vorratsbehälter vorsteht.

Im übrigen empfiehlt es sich in allen Fällen, den oder die Vorratsbehälter stirnseitig oder oben mit einer verschließbaren Füllöffnung für das Brandschutzmittel zu versehen, um die Vorratsbehälter, wenn nötig, auf einfache Weise mit dem Brandschutzmittel nachfüllen zu können.

Im folgenden wird die Erfindung an in der Zeichnung dargestellten Ausführungsbeispielen näher erläutert; es zeigen in schematischer Darstellung:
- Fig. 1: eine Abschottungsvorrichtung in einem senkrechten Schnitt in Leitungslängsrichtung,
- Fig. 2: eine andere Ausführungsform der erfindungsgemäßen Abschottungsvorrichtung in einer der Fig. 1 entsprechenden Darstellung.

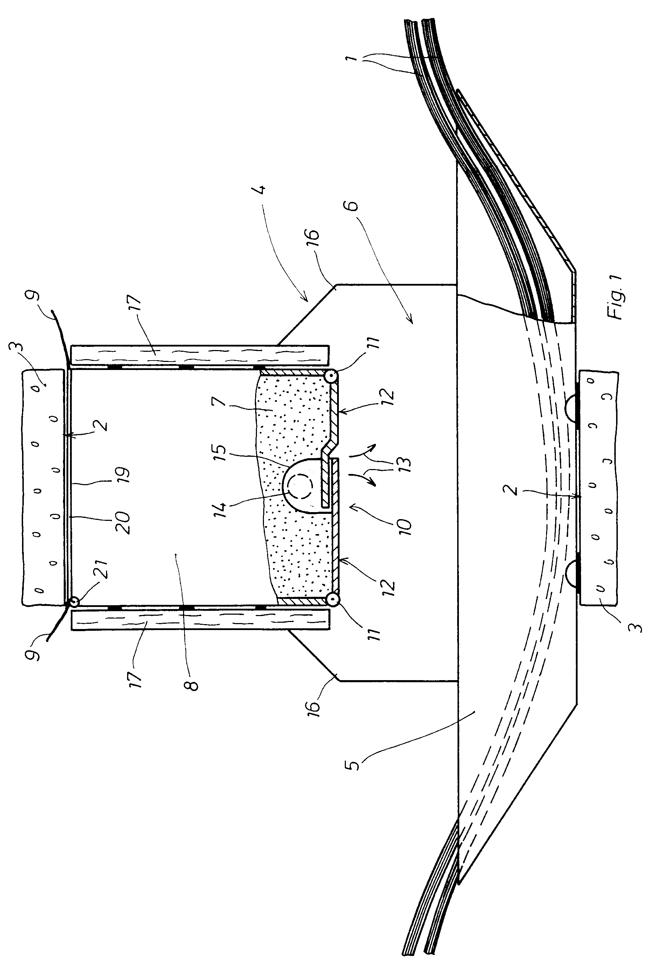

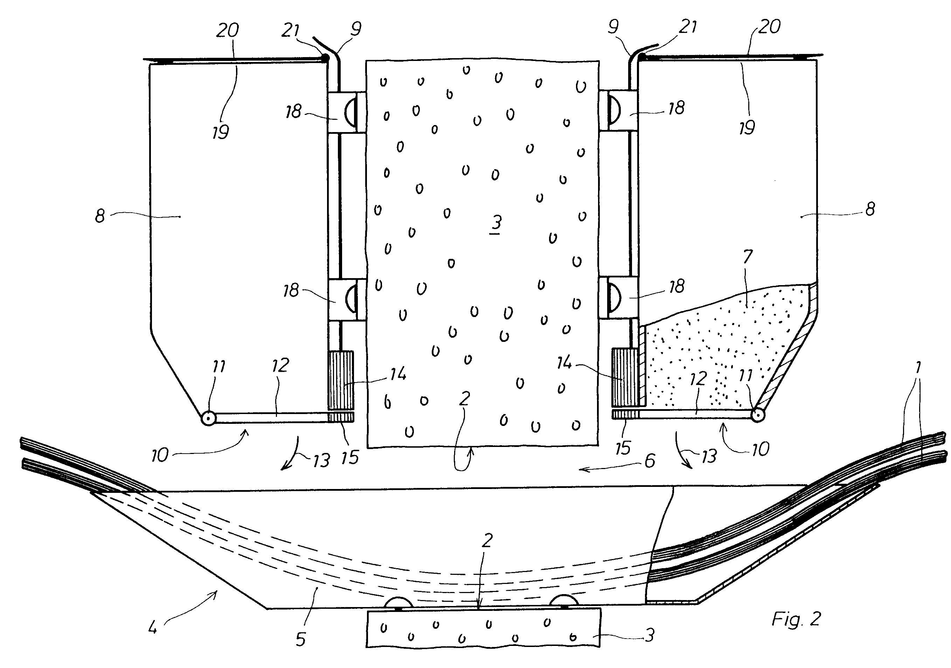

Die in der Zeichnung dargestellten Vorrichtungen dienen zur Brandabschottung einer Wandöffnung 2 für die Durchführung von Leitungen 1, wie elektrische Kabel, Rohre oder dergl., durch eine Wand 3. Die Vorrichtung umfaßt einen abgedichtet gegen die Wand in der Wandöffnung angeordneten, allgemein mit 4 bezeichneten Schottkasten, der für die Leitungen eine Durchführungsöffnung bildet, die in Leitungslängsrichtung in Form einer die Leitungen in nach unten durchgebogenem Verlauf aufnehmenden Kabelwanne ausgebildet ist. Die Durchführungsöffnung wird durch Einfüllen eines schütt- oder rieselfähigen Brandschutzmittels, beispielsweise Quarzsand, in die Kabelwanne geschlossen. Bis zum Verschließen der Durchführungsöffnung ist das in der Zeichnung lediglich teilweise bei 7 angedeutete Brandschutzmittel in mindestens einem Vorratsbehälter enthalten, der oberhalb der Durchführungsöffnung angeordnet ist. Der Vorratsbehälter öffnet sich erst im Brandfall nach unten zur Kabelwanne hin und läßt erst dann das Brandschutzmittel in die Kabelwanne auslaufen. Die Menge des im Vorratsbehälter enthaltenen Brandschutzmittels reicht aus, die Kabelwanne nach oben hin soweit zu füllen, daß die Durchführungsöffnung vollständig verschlossen wird. Das Öffnen des Vorratsbehälters wird durch Rauch- und/oder Brandmelder gesteuert, die in der Zeichnung nicht dargestellt, aber an dazu geeigneten Stellen in den Brandabschnitten beidseits der Wand angebracht sind. Die zu diesen Rauch- und/oder Brandmeldern führenden Steuerleitungen sind in der Zeichnung bei jeweils 9 angedeutet. Jeder Vorratsbehälter besitzt einen die Durchführungsöffnung nach oben begrenzenden Boden, der bewegliche Bodenteile aufweist, die in senkrechter Projektion gesehen über der Kabelwanne liegen. Sie bilden einen Verschluß des Vorratsbehälters und sind, gesteuert durch die Rauch- und/oder Brandmelder, aus der Schließstellung in die Offenstellung verstellbar, so daß in der Offenstellung das Brandschutzmittel aus dem Vorratsbehälter unmittelbar nach unten in die Kabelwanne 5 hineinfallen kann. In den gezeigten Ausführungsbeispielen bestehen die beweglichen Bodenteile aus jeweils bei 11 gelenkig an die Vorratsbehälter 8 angeschlossenen Klappen 12, die durch eine steuerbare Halteeinrichtung in der Schließstellung gehalten sind und bei Freigabe durch die Halteeinrichtung abwärts in Richtung der Pfeile 13 in die Offenstellung fallen. Diese Halteeinrichtung verfügt über durch die Rauch- und/oder Brandmelder gesteuerte Elektromagnete 14, die nur in Fig. 2 sichtbar, in Fig. 1 dagegen lediglich gestrichelt angedeutet sind. Im eingeschalteten Zustand halten die Elektromagnete 14 die Klappen 12 in der Schließstellung, wozu die Klappen 12 mit den Elektromagneten 14 zugeordneten Magnetgegenplatten 15 an den Magneten 14 haften. Im Ausführungsbeispiel nach Fig. 1 sind zwei solcher Klappen 12 vorgesehen, wobei aber nur die eine, in der Zeichnung linke Klappe von den Elektromagneten 14 in der Schließstellung gehalten wird, während die in der Zeichnung rechte Klappe auf der linken Klappe abgestützt ist. Geben also die Elektrmagnete 14 die linke Klappe frei, verliert die rechte Klappe ihre Unterstützung und fällt ebenfalls unter der Wirkung ihres Gewichtes und der darüber liegenden Füllung des Brandschutzmittels 7 abwärts in die Offenstellung. Im Ausführungsbeispiel nach Fig. 2 dagegen verfügt jeder der Vorratsbehälter 8 über lediglich nur eine Klappe 12.

Der Vorratsbehälter 8 im Ausführungsbeispiel nach Fig. 1 ist als Teil des Schottkastens 4 ausgebildet und unmittelbar in der Wandöffnung 2 angeordnet. Die Verbindung zwischen dem Vorratsbehälter 8 und der Kabelwanne 5 erfolgt über seitliche Wangen 16, die die Durchführungsöffnung 6 seitlich begrenzen und vergleichbar wie der Vorratsbehälter 8 und die Kabelwanne 5 gegen die Laibung der Wandöffnung 2 abgedichtet sind, was in der Zeichnung aber im einzelnen nicht dargestellt ist. Die Kabelwanne 5 mit den Wangen 16 und dem Vorratsbehälter 8 wird herstellerseitig fertig montiert und als Ganzes an der Baustelle in die vorbereitete Wandöffnung 2 eingesetzt. Um dem Vorratsbehälter 8 eine ausreichende Brandwiderstandsdauer zu geben, sind die in Leitungslängsrichtung stirnseitigen Wände mit unbrennbaren Brandschutzplatten 17 aus Kalziumsilikat abgedeckt.

Im Ausführungsbeispiel nach Fig. 2 sind insgesamt zwei Vorratsbehälter 8 vorgesehen, von welchen je einer auf beiden Seiten der Wand 3 angeordnet und über Befestigungseinrichtungen 18 an der Wand 3 gehalten ist. Dabei bildet die obere Begrenzung der Wandöffnung 2 unmittelbar auch die obere Begrenzung der Durchführungsöffnung 6. Die Kabelwanne 5 steht auf beiden Seiten der Wand 3 bis unter die Klappen 12 der Vorratsbehälter 8 vor.

In allen Ausführungsbeispielen besitzen im übrigen der oder die Vorratsbehälter 8 an ihrer Oberseite eine verschließbare Füllöffnung 19 zum Füllen bzw. Nachfüllen mit dem Brandschutzmittel. Derartige Nachfüllöffnungen können stattdessen aber auch an den Seitenwänden der Vorratsbehälter 8 vorgesehen sein. In den Ausführungsbeispielen sind diese Füllöffnungen 19 mit jeweils bei 21 am Vorratsbehälter 8 angelenkten Klappdeckeln 20 verschlossen.

## Patentansprüche

1. Vorrichtung zur Brandabschottung einer Wandöffnung (2) für die Durchführung von Leitungen (1), wie elektrische Kabel, Rohre oder dergl., durch eine Wand (3), mit einem abgedichtet gegen die Wand (3) in der Wandöffnung (2) angeordneten Schottkasten (4), der für die Leitungen (1) mindestens eine Durchführungsöffnung (6) aufweist, die in Leitungslängsrichtung in Form einer die Leitungen (1) in nach unten durchgebogenem Verlauf aufnehmenden Kabelwanne (5) ausgebildet und durch Einfüllen eines schütt- oder rieselfähigen Brandschutzmittels (7), insbesondere Quarzsand, in die Kabelwanne (5) verschließbar ist, dadurch gekennzeichnet, daß mindestens ein das Brandschutzmittel (7) enthaltender und oberhalb der Durchführungsöffnung (6) angeordneter Vorratsbehälter (8) vorgesehen ist, der erst im Brandfall, gesteuert durch Rauch- und/oder Brandmelder, sich zur Kabelwanne (5) hin öffnet und das Brandschutzmittel (7) in die Kabelwanne (5) auslaufen läßt.

2. Vorrichtung nach Anspruch 1, dadurch gekennzeichnet, daß der Vorratsbehälter (8) einen die Durchführungsöffnung (6) nach oben begrenzenden Boden (10) und dieser in senkrechter Projektion über der Kabelwanne (5) liegende bewegliche Bodenteile aufweist, die einen Verschluß des Vorratsbehälters (8) bilden und, gesteuert durch die Rauch- und/oder Brandmelder, aus der Schließstellung in die Offenstellung verstellbar sind.

3. Vorrichtung nach Anspruch 2, dadurch gekennzeichnet, daß die beweglichen Bodenteile aus Klappen (12) bestehen, die durch eine steuerbare Halteeinrichtung in der Schließstellung gehalten sind und bei Freigabe durch die Halteeinrichtung abwärts in die Offenstellung fallen.

4. Vorrichtung nach Anspruch 3, dadurch gekennzeichnet, daß die Halteeinrichtung durch die Rauch- und/oder Brandmelder gesteuerte Elektromagnete (14) aufweist, die im eingeschalteten Zustand die Klappen (12) in der Schließstellung halten.

5. Vorrichtung nach einem der Ansprüche 1 bis 4, dadurch gekennzeichnet, daß der Vorratsbehälter (8) als Teil des Schottkastens (4) in der Wandöffnung (2) angeordnet ist.

6. Vorrichtung nach Anspruch 5, dadurch gekennzeichnet, daß die in Leitungslängsrichtung stirnseitigen Wände des Vorratsbehälters (8) mit unbrennbaren Brandschutzplatten (17) abgedeckt sind.

7. Vorrichtung nach Anspruch 6, dadurch gekennzeichnet, daß die Brandschutzplatten (17) aus Kalziumsilikat bestehen.

8. Vorrichtung nach einem der Ansprüche 1 bis 4, dadurch gekennzeichnet, daß je einer der Vorratsbehälter (8) auf beiden Seiten der Wand (3) angeordnet und an der Wand (3) gehalten ist, wobei die obere Begrenzung der Wandöffnung (2) auch die der Durchführungsöffnung (6) bildet und die Kabelwanne (5) auf beiden Wandseiten bis unter die Vorratsbehälter (8) vorsteht.

9. Vorrichtung nach einem der Ansprüche 1 bis 8, dadurch gekennzeichnet, daß der oder die Vorratsbehälter (8) stirnseitig oder oben mit einer verschließbaren Füllöffnung (19) für das Brandschutzmittel (7) versehen sind.

## Claims

1. Apparatus for the fire-resistant closure of a wall opening (2) for the passage of conduits (1) such as electrical cables, pipes or the like through a wall (3), having a partitioning casing (4) which is arranged in the wall opening (2) in sealed relationship with the wall (3) and which for the conduits (1) has at least one passage opening (6) which in the longitudinal direction of the conduits is in the form of a cable trough (5) for accommodating the conduits (1) in a downwardly sagging configuration and which can be closed by the introduction into the cable trough (5) of a fire-protection agent (7) which is pourable or friable, in particular quartz sand, characterised in that there is provided at least one supply container (8) which contains the fire-protection agent (7) and which is arranged above the passage opening (6) and which opens towards the cable trough (5) only in a fire situation, controlled by stroke and/or fire detectors, and allows the fire-protection agent (7) to run out into the cable trough (5).

2. Apparatus according to claim 1 characterised in that the supply container (8) has a bottom (10) which defines the passage opening (6) in an upward direction and the bottom has movable bottom portions which in vertical projection lie above the cable trough (5) and which form a closure means of the supply container (8) and which are movable from the closed position into the open position under the control of the stroke and/or fire detectors.

3. Apparatus according to claim 2 characterised in that the cable bottom portions comprise flaps (12) which are held in the closed position by a controllable holding bans and which drop downwardly into the open position when released by the holding means.

4. Apparatus according to claim 3 characterised in that the holding bans has solenoids (14) which are controlled by the stroke and/or fire detectors and which hold the flaps (12) in the closed position in the switched-on condition.

5. Apparatus according to one of claim 1 to 4 characterised in that the supply container (8) is arranged as part of the partitioning casing (4) in the wall opening (2).

6. Apparatus according to claim 5 characterised in that the walls of the supply container (8), which are the end walls in the longitudinal direction of the conduits, are covered with incombustible fire-protection plates (17).

7. Apparatus according to claim 6 characterised in that the fire-protection plates (17) comprise calcium silicate.

8. Apparatus according to one of claims 1 to 4 characterised in that a respective one of the supply containers (8) is arranged on each of the two sides of the wall (3) and is held to the wall (3), wherein the upper boundary of the wall opening (2) also forms that of the passage opening (6) and the cable trough (5) projects on both sides of the wall to positions below the supply containers (8).

9. Apparatus according to one of claims 1 to 8 characterised in that the supply container or containers (8) is or are provided at the end or the top with a closable filling opening (19) for the fire-protection agent (7).

## Revendications

1. Dispositif coupe-feu installé dans l'ouverture (2) d'une paroi servant au passage de lignes ou conduites (1) telles que des câbles électriques, des tubes ou analogues, à travers une paroi (3), comportant une boîte de cloison coupe-feu (15) disposée d'une manière étanche par rapport à la paroi (3) dans l'ouverture de paroi (2) et qui possède, pour les lignes ou conduites (1), au moins une ouverture de traversée (6), qui est agencée dans la direction longitudinale des lignes ou conduites sous la forme d'un caniveau à câbles (5) qui loge des lignes ou conduites (1) selon une disposition fléchie vers le bas, et peut être fermée par remplissage du caniveau à câbles (5) par un milieu (7) de protection contre l'incendie en vrac ou apte à s'écouler, notamment du sable siliceux, caractérisé en ce qu'il est prévu au moins un réservoir contenant le milieu (7) de protection contre l'incendie et disposé au-dessus de l'ouverture de traversée (6) et qui s'ouvre en direction du caniveau à câbles (5) uniquement dans le cas d'un incendie, et ce d'une manière commandée par des détecteurs de fumée et/ou des avertisseurs d'incendie, et permet au milieu (7) de protection contre l'incendie de pénétrer dans le caniveau à câbles (5).

2. Dispositif selon la revendication 1, caractérisé en ce que le réservoir (8) possède un fond (10), qui limite vers le haut l'ouverture de traversée (6), et que ce fond comporte des éléments de fond mobiles, situés au-dessus du caniveau à câbles (5), en projection verticale, et qui forment un système de fermeture du réservoir (8) et peuvent être amenés de la position fermée dans la position ouverte d'une manière commandée par les détecteurs de fumée et/ou les avertisseurs d'incendie.

3. Dispositif selon la revendication 2, caractérisé en ce que les éléments de fond mobiles sont constitués par des volets (12), qui sont maintenus par un dispositif de retenue commandable, dans la position fermée et, lors de la libération par le dispositif de retenue, s'abaissent dans la position ouverte.

4. Dispositif selon la revendication 3, caractérisé en ce que le dispositif de retenue possède des électroaimants (14), commandés par les détecteurs de fumée et/ou les avertisseurs d'incendie et qui, à l'état activé, maintiennent les volets (12) dans la position fermée.

5. Dispositif selon l'une des revendications 1 à 4, caractérisé en ce que le réservoir (8) est disposé en tant que partie de la boîte de cloison coupe-feu (4) dans l'ouverture (2) de la paroi.

6. Dispositif selon la revendication 5, caractérisé en ce que les parois frontales, considérées dans la direction longitudinale des lignes ou conduites, du réservoir (8) sont recouvertes par des plaques pare-feu incombustibles (17).

7. Dispositif selon la revendication 6, caractérisé en ce que les plaques pare-feu (17) sont constituées par du silicate de calcium.

8. Dispositif selon l'une des revendications 1 à 4, caractérisé en ce que respectivement les réservoirs (8) sont disposés des deux côtés de la paroi (3) et sont retenus contre la paroi (3), la limite supérieure de l'ouverture de paroi (2) formant également la limite supérieure de l'ouverture de traversée (6), et un caniveau à câbles (5) débordant des deux côtés de la paroi jusqu'à s'étendre au-dessous du réservoir (8).

9. Dispositif selon l'une des revendications 1 à 8, caractérisé en ce que le ou les réservoirs (8) sont équipés, frontalement ou à leur partie supérieure, d'une ouverture de remplissage (19) pouvant être fermée, pour le milieu (7) de protection contre l'incendie.
